# EUROPEAN PATENT APPLICATION

(11) **EP 2 562 446 A1**
(43) Date of publication of application: **27.02.2013**
(21) Application number: 11306071.9
(22) Date of filing: 26.08.2011
(51) Int. Cl.: F16H 55/36

(54) **Pulley device with a damping element**

(71) Applicant: Aktiebolaget SKF, 41 550 Göteborg (SE)
(72) Inventor: Viault, Samuel, 37360 SAINT ANTOINE DU ROCHER (FR); Corbett, Richard, 37230 FONDETTES (FR); Arnault, Benoit, 37540 ST-CYR-SUR-LOIRE (FR); Berruet, Nicolas, 37360 NEUILLE-PONT-PIERRE (FR); Bonnet, Michel, 37100 TOURS (FR)
(74) Representative: Dossmann, Gérard

(57) **Abstract**

Pulley device for a rotary machine, especially a compressor (20), comprising a pulley (11), a rolling bearing (12), a torque transmission element (13) designed to be mounted on a rotary spindle (22) of the rotary machine (20), said pulley (11) being mounted on an outer ring (15) of the rolling bearing (12) and on the torque transmission element (13).

The torque transmission element (13) comprises a damping element (17) made of an elastically deformable metallic material.

## Description

The present invention relates to the field of torque transmission devices used in particular in belt-driven rotary machines, for example motor vehicle air conditioning compressors.

In such compressor drive devices, a belt-driven pulley drives the transmission spindle of the compressor via a torque transmission plate. The pulley is mounted on the outer ring of a rolling bearing, the inner ring of which is secured to a hollow shaft of the compressor housing. This type of device is described particularly in document FR 2 790 521.

However, since the belt-driven pulley is driven by an internal combustion engine of the motor vehicle, acyclisms resulting of the alternation between decompression and combustion phases are transmitted to the pulley, and to the transmission spindle of the compressor. Furthermore, vibrations of the rotation of the compressor spindle can also be transmitted to the pulley.

One aim of the present invention is therefore to overcome the aforementioned drawbacks.

It is a particular object of the present invention to provide a pulley device comprising means for filtering any vibrations from the pulley to the rotary spindle, and from the rotary spindle to the pulley.

In one embodiment, a pulley device for a rotary machine, especially a compressor, comprises a pulley, a rolling bearing, a torque transmission element designed to be mounted on a rotary spindle of the rotary machine. Said pulley is mounted on an outer ring of the rolling bearing and on the torque transmission element.

The torque transmission element comprises a damping element made of an elastically deformable metallic material.

Such a damping element improves the service life of the belt and the pulley by damping the vibrations between the pulley and the rotary spindle.

Advantageously, the damping element comprises at least one radially projecting portion adapted to cooperate with at least one cavity radially located on the pulley, for example on its periphery.

The cavity of the pulley cooperating with said damping element may have a slope so that if the torque transmission element transmits a torque exceeding a threshold value, the damping element is liable to unhook from the cavity of the pulley.

In one embodiment, the damping element is a helical spring having windings capable of deforming in a circumferential direction.

Advantageously, the torque transmission element comprises a torque transmission plate having a radial plate provided with at least one radially extending tongue adapted to cooperate with a winding of the helical spring.

For example, each end winding of the helical spring comprises a radially projecting portion, one projecting portion being adapted to cooperate with a lug located on the radial plate, and the other projecting portion being adapted to cooperate with the cavity of the pulley.

Advantageously, the radial plate comprises a series of slotted holes made through the radial plate forming annular portions centred on one and the same circle, angularly equidistant and tangential to the periphery of the radial plate.

Advantageously, said torque transmission plate is made of a stamped metal sheet.

Alternatively, the torque transmission plate is obtained by injecting a plastic material such as a polyamide, or by moulding a metallic material such as Aluminium based light alloy.

In another embodiment, the damping element comprises an axial sleeve designed to be mounted on the rotary spindle of the rotary machine and radial twisted blades extending radially from the axial sleeve and cooperating with a cavity of the pulley.

Thanks to the helical shape of each blade, the blades are flexile and elastically deformable in a circumferential direction, so that the vibrations between the rotary spindle and the pulley are damped.

Furthermore, each cavity of the pulley may comprise a noise damper between the end of each radial twisted blade and the pulley.

Advantageously, the damping element is made of a stamped metal sheet, and the pulley is overmoulded on the outer ring of the rolling bearing.

According to another aspect, it is proposed a rotary machine comprising a static hollow shaft, a rotary spindle, and a pulley device described above.

The present invention will be better understood with the aid of the detailed description of a number of embodiments given by way of non-limiting examples and illustrated by the attached drawings, in which:
- Figure 1 is a perspective view of a pulley device according to an embodiment of the invention, mounted on a compressor ;
- Figure 2 is a front view of the pulley device of Figure 1;
- Figure 3 is an axial section, along line III-III of Figure 2;
- Figure 4 is a perspective view of a damping element according to Figure 3;
- Figure 5 illustrates the damping element of Figure 3 in an unhooked position;
- Figure 6 is a front view of a pulley device according to another embodiment of the invention, mounted on a compressor ;
- Figure 7 is an axial section, along line VII-VII of Figure 6;
   and
- Figure 8 illustrates the damping element of Figure 7 in an unhooked position.

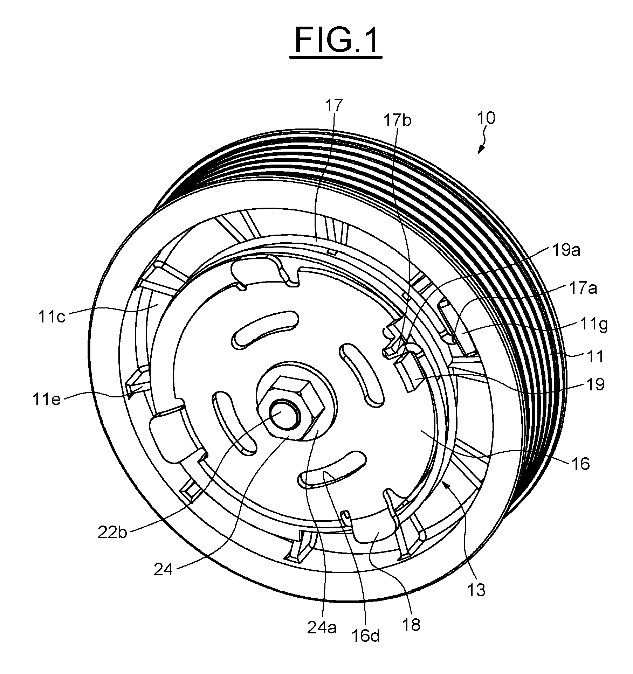

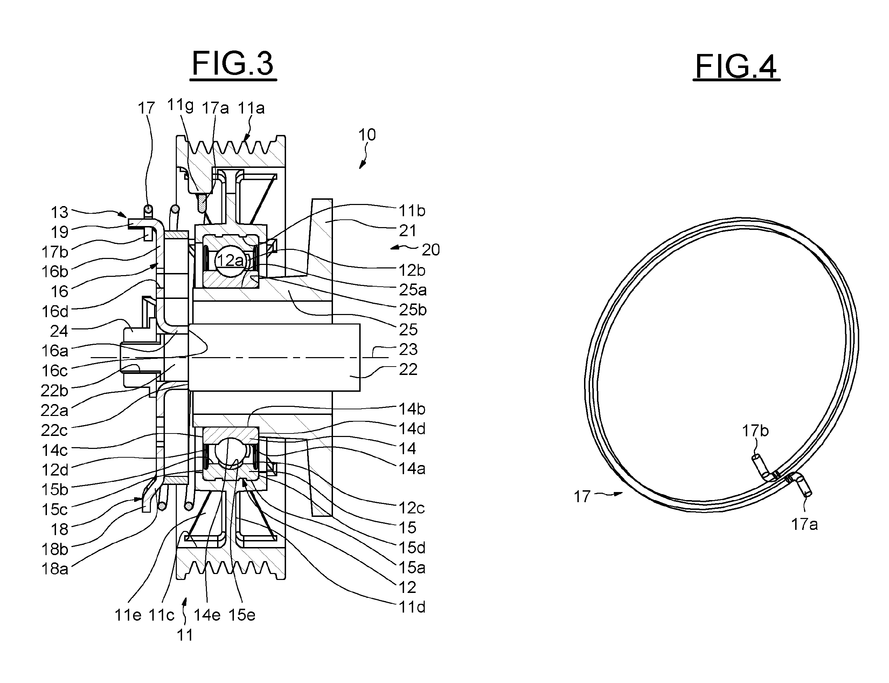

As illustrated on Figures 1 to 3, a pulley device, designed by general reference number 10, is designed to be mounted on a compressor 20 comprising a housing or casing 21 that does not rotate, and a transmission spindle 22 capable of rotating about an axis 23. As illustrated on Figure 3, the transmission spindle 22 may be provided with a stepped end 22a ending in a threaded portion 22b so that it can interact with a nut 24. The stepped end 22a, of a smaller cross section than the cross section of the spindle 22, is delimited by a shoulder 22c. The transmission spindle 22 passes through a hollow shaft 25 of the housing 21, coaxial with the transmission spindle 22.

The pulley device 10 comprises a pulley 11, a rolling bearing 12 and a torque transmission element 13. The pulley 11 has an outer surface 11a designed to cooperate with a belt (not illustrated), a bore 11b, and two lateral radial surfaces 11c and 11d, the surface 11d being arranged facing the casing 21, and the surface 11c being arranged on the opposite side to the casing 21 and longitudinally facing the hollow shaft 25. The outer surface 11a may have annular ribs to collaborate with a belt of the poly-V type for example. The bore 11b may have the form of annular ribs. The pulley 11 may comprise a plurality of stiffening ribs 11e. The pulley 11 may be made of resin material, for example based on polyamide, phenolic resin or alternatively polyurethane, or of metallic material, such as for example, light alloy.

The rolling bearing 12 comprises an inner ring 14, an outer ring 15, at least one row of rolling elements 12a, a cage 12b to maintain uniform circumferential spacing of the rolling elements 12a and two seals 12c and 12d. The inner ring 14 comprises an outer surface 14a of revolution, a bore 14b in contact with an axial surface 25a of the hollow shaft 25 of the casing 21, and two lateral radial surfaces 14c and 14d, the lateral surface 14d being in contact with a radial surface 25b of the shaft 25, for example a shoulder. A raceway 14e of toroidal shape is formed by machining from the outer surface 14a.

The outer ring 15 comprises an outer surface 15a, a bore 15b and two transverse radial surfaces 15c and 15d respectively aligned with the radial surfaces 14c and 14d. A raceway 15e is created by machining from the bore 15b. The raceway 15e is of toroidal shape.

Annular slots are formed on the outer surface 15a of the outer ring 15 in order to have complementary shape of the bore 11b of the pulley 11. The pulley 11 can be overmoulded on the outer ring 15 of the rolling bearing 12. This results in excellent cohesion between these two components.

The rolling elements 12a, for example balls, are positioned between the raceways 14e and 15e of the inner 14 and outer 15 rings.

The seals 12c and 12d can be force-fitted into slots formed from the bore 15b and near the radial surfaces 15c and 15d of the outer ring 15.

The torque transmitting element 13 comprises a torque transmission plate 16 and a damping element 17.

The torque transmission plate 16, made of a stamped metal sheet, comprises a sleeve tube 16a mounted on the end 22a of the transmission spindle 22 and a radial plate 16b extending radially from the axial sleeve 16a towards the outside and having the general shape of a disc. The sleeve tube 16a may be clamped between the nut 24 possibly supplemented by a washer 24a, and the shoulder 22c of the spindle 22, against which it bears via an axial end surface 16c of the sleeve tube 16a.

Starting from the end of the sleeve tube 16a located axially at the opposite end from the casing 21, the radial plate 16b extends radially in the overall form of a disc out to an external circumference. The radial plate diameter may be smaller than the maximum diameter of the pulley 11.

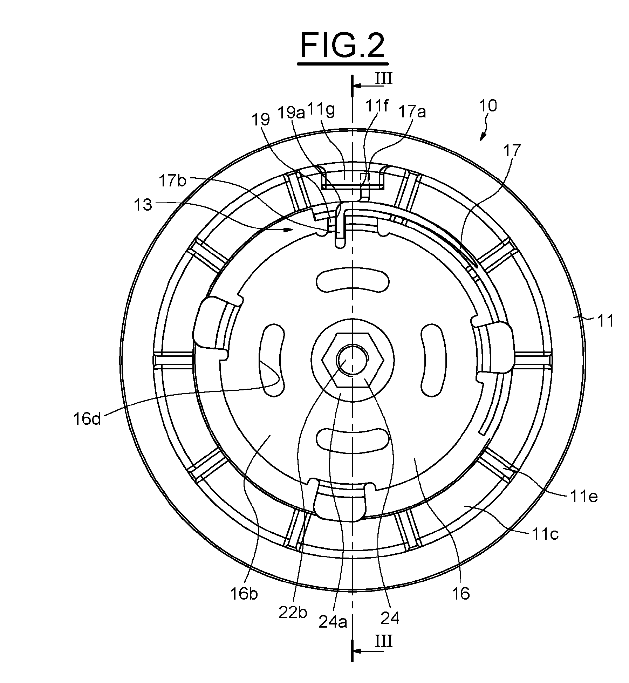

The radial plate 16b of the torque transmission element 13 comprises a first series of slotted holes 16d made axially through the radial plate 16b. As illustrated on Figures 1 and 2, these slotted holes 16d, in the form of four annular portions centred on one and the same circle, are angularly equidistant and tangential to the outer surface of the radial plate 16b. As an alternative, it is possible to have two diametrically opposed slotted holes or a number of slotted holes smaller or greater than four. It is possible to conceive of different shapes of slotted holes, for example round drillings or trapezoidal drillings. Such slotted holes 16d are drilled through the thickness of the radial plate 16b so as to cooperate with a fitting tool (not illustrated) for axially fitting the rolling bearing 12 and the pulley 11 onto a hollow shaft 25 of the housing.

The radial plate 16b of the torque transmission element 13 further comprises on its periphery, radially extending tongues 18 extending radially from the periphery of the radial plate 16b towards the outside by a first portion 18a slightly tilted and a radial portion 18b and a lug 19 projecting radially from the radial plate 16b towards the outside. The lug 19 comprises a slot 19a adapted to cooperate with the damping element 17.

The damping element 17, illustrated in details in Figure 4, is made of an elastically deformable metallic material, such as steel. The damping element 17 is a helical spring having windings capable of deforming in a circumferential direction. Each end windings of the helical spring 17 comprises a radially projecting portion, such as hooks 17a, 17b. The first radially projecting portion 17a extends towards the pulley 11, whereas the second radially projecting portion 17b extends towards the inside of the spring 17. The first radially projecting portion 17a is adapted to cooperate with a cavity 11f located on a radial protrusion 11g extending on the periphery of the pulley 11 from the outer surface 11a towards the inside. The second radially projecting portion 17b is adapted to cooperate with the slot 19a of the lug 19 of the radial plate 16b.

As illustrated on Figure 3, the helical spring 17 is stretched in order to be hooked to the pulley 11. The cavity 11f of the pulley 11 provides a slope so that if the spring 17 transmits a torque exceeding a threshold value V, such as 50 N.m, the first radially projecting portion 17a is liable to unhook from the cavity 11f.

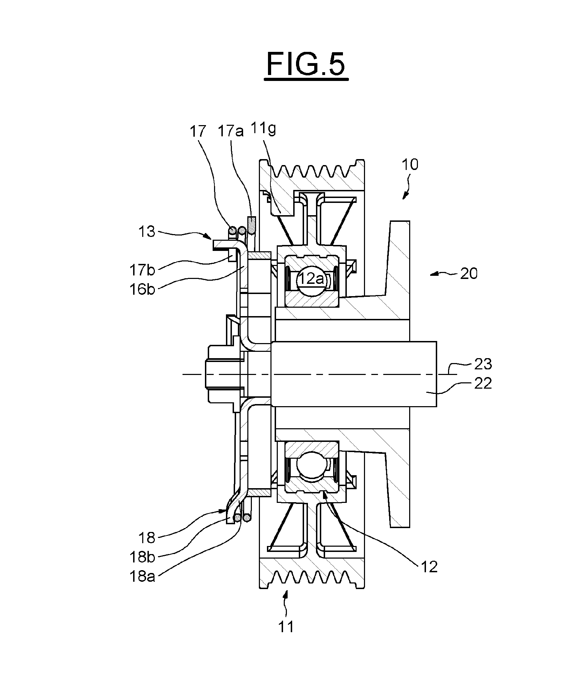

In the unhooked position of the spring 17, shows in Figure 5, the helical spring 17 returns in its rest position. The first radially projecting portion 17a is unhooked from the cavity 11f and the winding of the spring 17 is axially retained by the radially extending tongues 18.

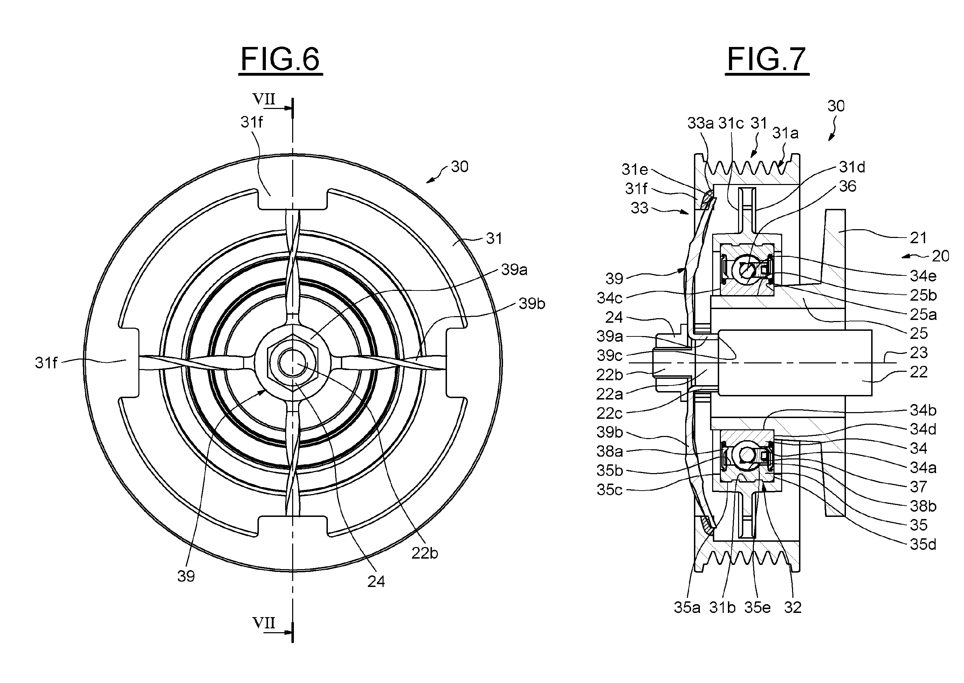

The embodiment shown in Figures 6 to 8, in which identical parts bear the same reference, is substantially similar to the embodiment of Figures 1 to 5. However, the pulley device 30 of Figures 6 to 8 differs from the pulley 10 device of Figures 1 to 5.

As illustrated on Figures 6 to 8, a pulley device, designed by general reference number 30, is designed to be mounted on a compressor 20 comprising a housing or casing 21 that does not rotate, and a transmission spindle 22 capable of rotating about an axis 23. As illustrated on Figure 7, the transmission spindle 22 may be provided with a stepped end 22a ending in a threaded portion 22b so that it can interact with a nut 24. The stepped end 22a, of a smaller cross section than the cross section of the spindle 22, is delimited by a shoulder 22c. The transmission spindle 22 passes through a hollow shaft 25 of the housing 21, coaxial with the transmission spindle 22.

The pulley device 30 comprises a pulley 31, a rolling bearing 32 and a torque transmission element 33. The pulley 31 has an outer surface 31a designed to cooperate with a belt (not illustrated), a bore 31b, and two lateral radial surfaces 31c and 31d, the surface 31d being arranged facing the casing 21, and the surface 31c being arranged on the opposite side to the casing 21. The outer surface 31a may have annular ribs to collaborate with a belt of the poly-V type for example. The bore 31b may have the form of annular ribs. The pulley 31 may be made of resin material, for example based on polyamide, phenolic resin or alternatively polyurethane, or of metallic material, for example, light alloy.

The rolling bearing 32 comprises an inner ring 34, an outer ring 35, at least one row of rolling elements 36, a cage 37 to maintain uniform circumferential spacing of the rolling elements 36 and two seals 38a and 38b. The inner ring 34 comprises an outer surface 34a of revolution, a bore 34b in contact with an axial surface 25a of the hollow shaft 25 of the casing 21, and two lateral radial surfaces 34c and 34d, the lateral surface 34d being in contact with a radial surface 25b of the shaft 25, for example a shoulder. A raceway 34e of toroidal shape is formed by machining from the outer surface 34a.

The outer ring 35 comprises an outer surface 35a, a bore 35b and two transverse radial surfaces 35c and 35d respectively aligned with the radial surfaces 34c and 34d. A raceway 35e is created by machining from the bore 35b. The raceway 35e is of toroidal shape. Annular slots are formed on the outer surface 35a of the outer ring 35 in order to have complementary shape of the bore 31b of the pulley 31. The pulley 31 can be overmoulded on the outer ring 35 of the rolling bearing 32. This results in excellent cohesion between these two components.

The rolling elements 36, for example balls, are positioned between the raceways 34e and 35e of the inner 34 and outer 35 rings.

The seals 38a and 38b can be force-fitted into slots formed from the bore 35b and near the radial surfaces 35c and 35d of the outer ring 35.

The torque transmitting element 33 comprises a damping element 39 made of a stamped metal sheet having an axial sleeve 39a mounted on the end 22a of the transmission spindle 22 and radial twisted blades 39b extending radially from the axial sleeve 39a towards the outside. The sleeve tube 39a may be clamped between the nut 24 possibly supplemented by a washer (not illustrated), and the shoulder 22c of the spindle 22, against which it bears via an axial end surface 39c of the sleeve tube 39a.

As illustrated on Figure 6, the four radial twisted blades 39b are angularly equidistant and diametrically opposed. As an alternative, it is possible to have two radial blades 39b or a number of radial blades greater than four.

The helical shape of the radial blades 39b provides a damping element 39 elastically deformable in a circumferential direction, in order to damp the vibrations between the rotary spindle 22 and the pulley 31.

The end of each radial blade 39b cooperate with a cavity 31e located on a radial protrusion 31f extending on the periphery of the pulley 31 from the outer surface 31a towards the inside. As illustrated on Figure 7, the blades 39b are stretched in order to be hooked to the pulley 31. The cavity 31e of the pulley 31 provides a slope so that if the damping element 39 transmits a torque exceeding a threshold value V, such as 50 N.m, the end of each radial twisted blade 39b are liable to unhook from the cavity 31e.

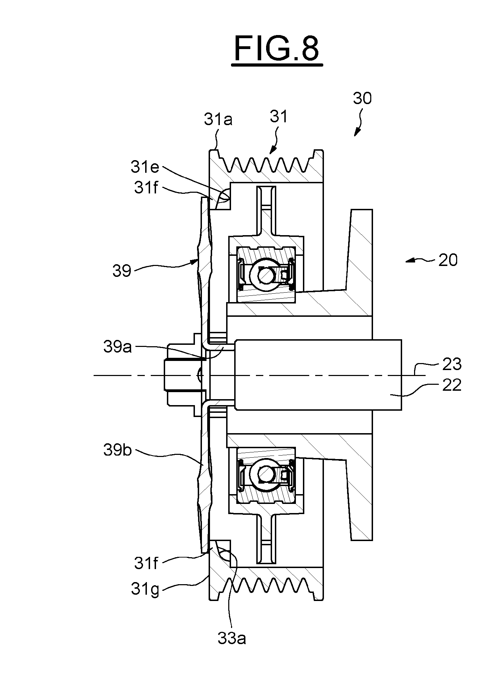

In the unhooked position of the radial twisted blades 39b, shown in Figure 8, each radial blade 39b returns in its rest position and does not transmits torque from the pulley 31 to the rotary spindle 22. Each end of the radial twisted blades 39b is unhooked from the cavity 31e and rests axially against the outer lateral surface 31g of the radial protrusion 31f of the pulley 31.

As illustrated on Figures 7 and 8, each cavity 31e of the pulley 31 comprises a noise damper 33a, made of rubber material, in order to damp the vibrations between the blades 39b and the cavities 31 of the pulley 31.

With the pulley device according to the invention, vibrations from the pulley to the rotary spindle and from the rotary spindle to the pulley are filtered by the damping element, thanks to its circumferential elasticity which can damp the acyclisms of the combustion engine and the vibrations from the rotary spindle.

Furthermore, the pulley device according to the invention integrates thus two functions, a damping function and a torque limiter function, thanks to the shape of the damping element.

## Claims

1. Pulley device for a rotary machine, especially a compressor (20), comprising a pulley (11, 31), a rolling bearing (12, 32), a torque transmission element (13, 33) designed to be mounted on a rotary spindle (22) of the rotary machine (20), said pulley (11, 31) being mounted on an outer ring (15, 35) of the rolling bearing (12, 32) and on the torque transmission element (13, 33), **characterized in that** the torque transmission element (13, 33) comprises a damping element (17, 39) made of an elastically deformable metallic material.

2. Pulley device according to claim 1, in which the damping element (17, 39) comprises at least one radially projecting portion (17a, 39b) adapted to cooperate with at least one cavity (11f, 31e) radially located on the pulley (11, 31).

3. Pulley device according to claim 2, in which the cavity (11f, 31e) of the pulley (11, 31) cooperating with the damping element (17, 39) has a slope so that if the torque transmission element (13, 33) transmits a torque exceeding a threshold value (V), the damping element (17, 39) is liable to unhook from the cavity (11f, 31e) of the pulley (11, 31).

4. Pulley device according to any one of claims 1 to 3, in which the damping element (17) is a helical spring having windings capable of deforming in a circumferential direction.

5. Pulley device according to claim 4, in which the torque transmission element (13) comprises a torque transmission plate (16) having a radial plate (16b) provided with at least one radially extending tongue (18) adapted to cooperate with a winding of the helical spring (17).

6. Pulley device according to claims 2 and 5, in which each end winding of the helical spring (17) comprises a radially projecting portion (17a, 17b), one projecting portion (17b) being adapted to cooperate with a lug (19) located on the radial plate (16b), and the other projecting portion (17a) being adapted to cooperate with the cavity (11f) of the pulley (11).

7. Pulley device according to claim 5 or 6, in which the radial plate (16b) comprises a series of slotted holes (16d) made through the radial plate (16b) forming annular portions centred on one and the same circle, angularly equidistant and tangential to the periphery of the radial plate (16b).

8. Pulley device according to any one of claims 4 to 7, in which said torque transmission plate (16) is made of a stamped metal sheet.

9. Pulley device according to any one of claims 4 to 7, in which said torque transmission plate (16) is obtained from injecting a plastic material, or by moulding a metallic material.

10. Pulley device according to any one of claims 1 to 3, in which the damping element (39) comprises an axial sleeve (39a), designed to be mounted on the rotary spindle (22) of the rotary machine (20) and radial twisted blades (39b) extending radially from the axial sleeve (39a) and cooperating the pulley (31).

11. Pulley device according to claims 2 and 10, in which radial twisted blades (39b) cooperate with one cavity (31e) of the pulley (31).

12. Pulley device according to claim 11, in which each cavity (31e) of the pulley (31) comprises a noise damper (33a) between the end of each radial twisted blade (39b) and the pulley (31).

13. Pulley device according to any one of claims 10 to 12, in which said damping element (39) is made of a stamped metal sheet.

14. Pulley device according to any one of the preceding claims, in which the pulley (11, 31) is overmoulded on the outer ring (15, 35) of the rolling bearing (12, 32).

15. Rotary machine comprising a static hollow shaft (25), a rotary spindle (22), and a pulley device (10, 30) according to any one of the preceding claims.
